# EUROPEAN PATENT APPLICATION

(11) **EP 4 847 756 A1**
(43) Date of publication of application: **02.12.2026**
(21) Application number: 26172776.2
(22) Date of filing: 16.04.2026
(51) Int. Cl.: F02C 6/14, F01D 15/10, F02C 7/275

(54) **GAS TURBINE POWER-GENERATING AND SYNCHRONOUS CONDENSING SYSTEM, AND GAS TURBINE POWER-GENERATING AND SYNCHRONOUS CONDENSING METHOD USING SAME**

(30) Priority: 28.05.2025 KR 20250069984
(71) Applicant: Doosan Enerbility Co., Ltd., Seongsan-gu Changwon-si, Gyeongsangnam-do 51711 (KR)
(72) Inventor: Hwang, Kyu Sic, Changwon-si, Gyeongsangnam-do (KR)
(74) Representative: BCKIP Part mbB

(57) **Abstract**

A gas turbine generating and synchronous condensing system capable of generating electric power and providing inertia to a power system, and a gas turbine power-generating and synchronous condensing method using the same are provided. The gas turbine generating and synchronous condensing system includes a gas turbine comprising a compressor configured to compress air, a combustor configured to combust fuel, and a turbine configured to be rotated by combustion gas generated by the combustor, a generator coupled to the gas turbine to generate electrical power using a rotational force, a flywheel selectively coupled to the generator and configured to provide rotational inertia, a first clutch configured to selectively couple or decouple the gas turbine and the generator, and a second clutch configured to selectively couple or decouple the generator and the flywheel.

## Description

This application claims priority to Korean Patent Application No. 10-2025-0069984, filed on May 28, 2025.

### BACKGROUND

### Field

Apparatuses and methods consistent with exemplary embodiments relate to a gas turbine power-generating and synchronous condensing system capable of generating power using a gas turbine and providing inertia to a power system, and a gas turbine power-generating and synchronous condensing method using the same.

### Description of the Related Art

Gas turbines are power engines that mix compressed air from a compressor with fuel for combustion and rotate a turbine with high-temperature gas produced by the combustion. Gas turbines are used to drive generators, aircraft, ships, trains, and other vehicles.

To mitigate global climate change and achieve carbon neutrality, the integration of renewable energy sources, such as solar and wind power, into electrical grids has increased significantly. However, renewable energy power generation is often characterized by high output fluctuation and intermittency, which complicates grid stabilization and operation.

Conventional power systems have traditionally relied on the physical mass of large rotating generators to provide system inertia, which resists sudden changes in grid frequency. In contrast, many renewable sources are connected via power electronics that lack inherent mechanical inertia. Consequently, the surge in renewable penetration has led to a critical deficiency in system inertia, impacting voltage stabilization and frequency maintenance. To address these issues, grid operators utilize equipment such as Static Var Compensators (SVCs), Static Synchronous Compensators (STATCOMs), and synchronous condensers. While SVCs and STATCOMs provide reactive power, they are solid-state devices that do not provide physical rotational inertia.

A synchronous condenser, functioning as a no-load synchronous motor (a rotating-type device), offers several technical advantages of providing system inertia, withstanding high voltage sags, eliminating the generation of harmful harmonic waves, and providing high short-circuit currents during grid events.

Despite these benefits, integrating synchronous condensers into existing gas turbine infrastructure presents significant technical challenges. Standalone installations are often cost-inefficient due to the requirement for redundant machinery. Further, conventional configurations suffer from a synchronization lag when transitioning from a stopped or low-speed gas turbine to a high-speed rotated synchronous condensing state, the disparity in rotational speeds results in excessively long switching time.

### SUMMARY

Aspects of one or more exemplary embodiments provide a gas turbine power-generating and synchronous condensing system and a gas turbine power-generating and synchronous condensing method using the same, which are capable of rapidly switching between synchronous condensing operation and power-generating operation.

Additional aspects will be set forth in part in the description which follows and, in part, will become apparent from the description, or may be learned by practice of the exemplary embodiments.

According to an aspect of an exemplary embodiment, there is provided a gas turbine power-generating and synchronous condensing system including: a gas turbine including a compressor configured to compress air, a combustor configured to combust fuel, and a turbine configured to be rotated by combustion gas generated by the combustor; a generator coupled to the gas turbine to generate electrical power using a rotational force; a flywheel selectively coupled to the generator and configured to provide rotational inertia; a first clutch configured to selectively couple or decouple the gas turbine and the generator; and a second clutch configured to selectively couple or decouple the generator and the flywheel.

The gas turbine power-generating and synchronous condensing system may further include a low-speed rotating member configured to rotate the gas turbine at a first speed during a standby mode while the gas turbine and the generator may be decoupled from each other.

The low-speed rotating member may be coupled to the first clutch and is configured to rotate the gas turbine via the first clutch.

A starter motor may be disposed at a position between the gas turbine and the first clutch and may be configured to increase a rotational speed of the gas turbine when starting the gas turbine.

The gas turbine power-generating and synchronous condensing system may further include a static frequency converter coupled to the generator and configured to modulate at least one of a voltage and frequency.

The gas turbine power-generating and synchronous condensing system may further include an energy storage system (ESS) coupled to the static frequency converter, wherein the static frequency converter may brake rotation of a rotor shaft coupled to the gas turbine, generate electrical power and transmit the electrical power to the energy storage system.

The gas turbine power-generating and synchronous condensing system may further include a grid-forming inverter coupled to the static frequency converter and configured to provide virtual inertia to a synchronous condenser.

According to an aspect of another exemplary embodiment, there is provided a gas turbine power-generating and synchronous condensing method including: generating power by supplying fuel to a combustor to rotate a turbine with the generated combustion gas; performing a primarily switching operation by decoupling a gas turbine from a generator via a first clutch, and coupling the generator to a flywheel via a second clutch; performing a synchronous condensing operation by rotating the generator and the flywheel to provide rotational inertial to a power system, and rotating the gas turbine at a first speed during the synchronous condensing operation; and performing a secondary switching operation by increasing a rotating speed of the gas turbine rotated at the first speed, engaging the first clutch to couple the gas turbine to the generator, and subsequently decoupling the flywheel from the generator via the second clutch.

The primary switching operation may include maintaining the gas turbine in a rotational state at a full speed no-load (FSNL) condition.

The primary switching operation may include supplying a rotational force to the generator via a static frequency converter coupled to the generator and coupling the generator to the flywheel via the second clutch.

The primary switching operation may include increasing an operational load on the gas turbine via the static frequency converter while maintaining rotational speed.

The primary switching operation may include operating the static frequency converter in a braking energy regeneration mode to decelerate the gas turbine and generate electrical power, and supplying the electrical power to an energy storage system (ESS).

The primary switching operation may be performed by deactivating a forcible engagement function of the first clutch, and disengaging the first clutch in response to a rotational speed differential between the gas turbine and the generator.

During the synchronous condensing operation, the first speed may be maintained within a range of 1 rpm to 5 rpm.

The secondary switching operation may include increasing rotating speed of the gas turbine rotated at the first speed via the starter motor, supplying fuel to the combustor to initiate combustion, and increasing rotating speed of the turbine using the combustion gas generated by the combustor.

The secondary switching operation may be performed by coupling the gas turbine to the generator via the first clutch upon the gas turbine reaching a synchronous speed and subsequently decoupling the flywheel from the generator via the second clutch after the gas turbine and the generator may be coupled to each other.

The secondary switching operation may include removing a load by a static frequency converter and increasing rotating speed of the gas turbine to full speed no-load (FSNL) condition.

The secondary switching operation may be performed by synchronizing the gas turbine with the rotating speed and frequency required by the power system via the static frequency converter upon the gas turbine reaching the full speed no-load (FSNL) condition.

According to one or more exemplary embodiments, the gas turbine power-generating and synchronous condensing system utilizes the generator and the flywheel to provide at least one of reactive power and rotational inertia to the power system, thereby enhancing the power system stability. The power system is configured to facilitate rapid, bidirectional switching between the power-generating operation and the synchronous condensing operation. This seamless transition is achieved through a coordinated control of a first clutch and a second clutch, allowing the system to respond dynamically to grid frequency fluctuations.

In one or more exemplary embodiments, the starter motor is coupled to the gas turbine to enable rapid acceleration during a transition from synchronous condensing operation to power-generating operation. Furthermore, the low-speed rotating member is installed at the first clutch to rotate the rotor shaft of the gas turbine at a first rotational speed. By maintaining the gas turbine in a rotated state via the low-speed rotating member during the synchronous condensing operation, the system reduces the load on the starter motor, thereby significantly decreasing the overall start-up time required to return to full load operation.

### BRIEF DESCRIPTION OF THE DRAWINGS

The above and other aspects, features, and advantages of certain embodiments of the present disclosure will be more clearly understood from the following detailed description taken in conjunction with the accompanying drawings, in which:
FIG. 1 is a block diagram showing a gas turbine power-generating and synchronous condensing system according to an exemplary embodiment;
FIG. 2 is a flowchart illustrating a gas turbine power-generating and synchronous condensing method according to an exemplary embodiment;
FIG. 3 is a block diagram showing the power-generating operation of the gas turbine power-generating and synchronous condensing system according to the exemplary embodiment;
FIG. 4 is a block diagram showing the synchronous condensing operation of the gas turbine power-generating and synchronous condensing system according to the exemplary embodiment;
FIG. 5 is a block diagram showing the gas turbine power-generating and synchronous condensing system according to another exemplary embodiment;
FIG. 6 is a flowchart illustrating the gas turbine power-generating and synchronous condensing method according to another exemplary embodiment; and
FIG. 7 is a block diagram showing the gas turbine power-generating and synchronous condensing system according to another exemplary embodiment.

### DETAILED DESCRIPTION

Various modifications and various embodiments will be described with reference to accompanying drawings so that those skilled in the art can easily carry out the disclosure. However, it should be understood that the various embodiments are not for limiting the scope of the disclosure to the specific embodiments, but they should be interpreted to include all modifications, equivalents, additions or alternatives of the embodiments included within the scope and spirit disclosed herein.

The terminology used herein is for the purpose of describing specific embodiments only, and is not intended to limit the scope of the present disclosure. As used herein, the singular forms "a", "an" and "the" are intended to include the plural forms as well, unless the context clearly indicates otherwise. In the disclosure, terms such as "comprise", "include", or "have/has" should be construed as designating that there are such features, integers, steps, operations, elements, components, and/or combinations thereof, and do not preclude the presence or addition of one or more other features, integers, steps, operations, elements, components, and/or combinations thereof.

In the following description, like drawing reference numerals are used for like elements, even in different drawings. The matters defined in the description, such as detailed construction and elements, are provided to assist in a comprehensive understanding of the exemplary embodiments. However, it is apparent that the exemplary embodiments can be practiced without those specifically defined matters. Also, well-known functions or configurations are not described in detail since they would obscure the description with unnecessary detail. For the same reason, some components in the accompanying drawings may be exaggerated, omitted, or simplified.

Terms such as "first," "second," and so on may be used to describe a variety of elements, but the elements should not be limited by these terms. The terms are used simply to distinguish one element from other elements. The use of such ordinal numbers should not be construed as limiting the meaning of the term. For example, the components associated with such an ordinal number should not be limited in the order of use, placement order, or the like. If necessary, each ordinal number may be used interchangeably.

The terms, such as 'part' or 'module', etc., should be understood as a unit that performs at least one function or operation and that may be embodied as hardware, software, or a combination thereof. With respect to an element described as a "unit" or "module", two or more elements may be combined into a single element, or a single element may be divided into two or more elements according to the subdivided functions. Also, each element described below may additionally perform some or all of functions performed by other elements, in addition to its main functions, and some of the main functions of each element may be performed entirely by other components.

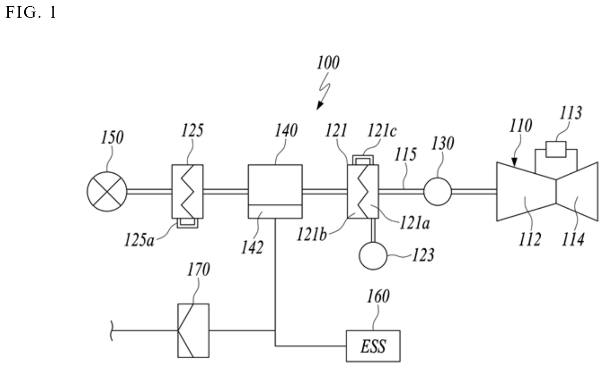

Hereinbelow, a gas turbine according to a first exemplary embodiment will be described in detail with reference to FIG. 1. FIG. 1 is a block diagram showing a gas turbine power-generating and synchronous condensing system according to an exemplary embodiment.

Referring to FIG. 1, a gas turbine power-generating and synchronous condensing system 100 may include a gas turbine 110, a generator 140, a flywheel 150, a first clutch 121, a second clutch 125, a starter motor 130, and a low-speed rotating member 123.

The gas turbine 110 may include a compressor 112, a combustor 113, and a turbine 114. The compressor 112 may compress external air. The combustor 113 may mix compressed air supplied from the compressor 112 with fuel and combust the mixture. The turbine 114 may generate a rotational force for generating electric power by the combustion gas supplied from the combustor 113.

The generator 140 is connected to the gas turbine 110 and generates electric power using the rotational force of the gas turbine 110. The generator 140 may be connected to the gas turbine 110 via a rotor shaft 115. The generator 140 may include a static frequency converter 142 that converts voltage and frequency. When the power-generating operation of the gas turbine 110 is stopped, the static frequency converter 142 increases the load applied to the gas turbine 110 to facilitate deceleration, generates electric power using the braking energy, and transmits the generated power to an energy storage system (ESS) 160.

The first clutch 121 may be installed between the generator 140 and the gas turbine 110 to control the connection between the gas turbine 110 and the generator 140. The first clutch 121 is operable to mechanically engage or disengage the generator 140 from the rotor shaft 115 of the gas turbine 110.

The first clutch 121 includes a rotor connector 121c to forcibly couple the rotor shaft 115 to the generator 140. If a function of the rotor connector 121c is deactivated and a rotational speed difference arises between the generator 140 and the gas turbine 110, the first clutch 121 may be disengaged. To ensure operational safety and precision, a sensor may be installed on the first clutch 121 to monitor the engagement status.

The first clutch 121 may include a first member 121a connected to the gas turbine 110 and a second member 121b connected to the generator 140. The low-speed rotating member 123 may be installed at the first member 121a to rotate the gas turbine 110 at a first speed in a standby mode.

The low-speed rotating member 123 is connected in parallel with the first clutch 121 and may be connected to the first member 121a via a timing belt or the like. The low-speed rotating member 123 rotates the gas turbine 110 at a low, first speed. For example, the first speed may range from approximately 2 rpm to 5 rpm, and more specifically, may be 3 rpm.

The low-speed rotating member 123 may rotate the gas turbine 110 via the first clutch 121. When the low-speed rotating member 123 is engaged with the first clutch 121, this provides significantly improved efficiency compared to when the low-speed rotating member 123 is directly coupled to the rotor shaft 115. Further, the low-speed rotating member 123 may be configured to receive electrical current only when the first clutch 121 is in a disconnected state, thereby preventing mechanical interference.

The starter motor 130 may be disposed between the first clutch 121 and the gas turbine 110. The starter motor 130 is configured to accelerate the gas turbine 110 from the first speed to a second speed at which flame energy can initiate acceleration. The starter motor 130 increases the rotating speed of the gas turbine 110 and the generator 140, and may supply rotational force to the gas turbine 110 until the flame energy of the gas turbine 110 accelerates the rotor shaft 115.

Once the gas turbine 110 is sufficiently rotated by the flame energy, the starter motor 130 is deactivated, allowing the gas turbine 110 to reach its rated operational speed independently. In one embodiment, the starter motor 130 includes a bidirectional-drive motor capable of selectively transmitting torque to either the gas turbine 110 or the generator 140, or both, depending on the operational mode of the system.

The flywheel 150 may have various shapes capable of providing rotational inertia. The second clutch 125 includes a function to forcibly disengage the connection. During the power-generating operation, the flywheel 150 remains disengaged from the generator 140. The second clutch 125 is capable of engaging the rotor shaft 115 at high speeds, which ranges from approximately 3400 rpm to 3800 rpm.

The second clutch 125 includes a rotor disconnector 125a configured to forcibly disengage the rotor shaft 115, and when the rotor disconnector 125a is deactivated, the rotor shaft 115 may return to the connected state. The second clutch 125 is capable of disengaging the flywheel 150 from the generator 140 during the power-generating operation, and engaging the flywheel 150 with the generator 140 during the synchronous condensing operation. A sensor may be disposed to the second clutch 125 to determine whether the second clutch is engaged.

The energy storage system (ESS) 160 and a grid-forming inverter 170 may be electrically coupled to the generator 140.

The energy storage system 160 may receive and store electrical energy recovered by the static frequency converter 142 during regenerative braking phases. In addition, the energy storage system 160 is configured to provide supplemental power output in response to varied grid demands, such as during partial-load operations to optimize efficiency, or during full load operations when the grid exhibits a power deficit.

When the inertia coefficient provided by the flywheel 150 and the generator 140 is insufficient, or when additional inertia is required to stabilize the power system, the grid-forming inverter 170 may provide virtual inertia. The grid-forming inverter 170 may receive power from the energy storage system 160 and provide virtual inertia to support frequency within an operating range of approximately 57.5 Hz to 61.5 Hz.

Therefore, the gas turbine power-generating and synchronous condensing system 100 stabilizes the power system by supplying reactive power to the power system through the generator 140 and the flywheel 150. Furthermore, it facilitates the transition from the power-generating operation to the synchronous condensing operation, as well as the transition from the synchronous condensing operation to the power-generating operation.

Furthermore, by utilizing the starter motor 130, the transition from synchronous condensing operation to the power-generating operation can be performed rapidly, and because the low-speed rotating member 123 is disposed to the first clutch 121, the rotor shaft 115 of the gas turbine 110 may be easily rotated by leveraging the low-speed rotating member 123. Additionally, the gas turbine 110 continues to be rotated by the low-speed rotating member 123 even during synchronous condensing operation, the load imposed on the starter motor 130 can be reduced, and the start-up time can be shortened.

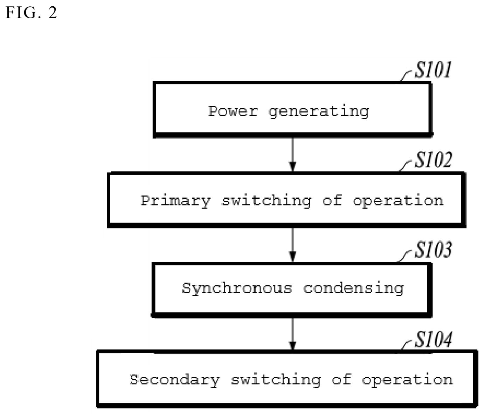

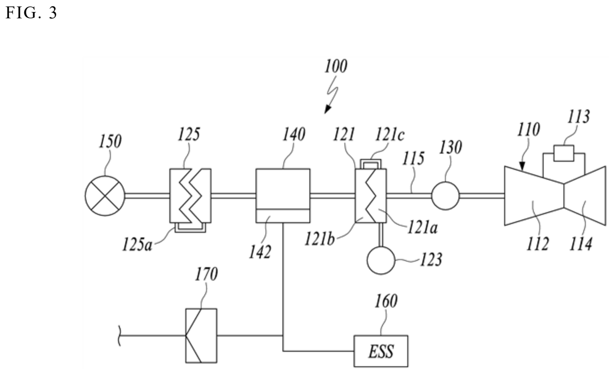

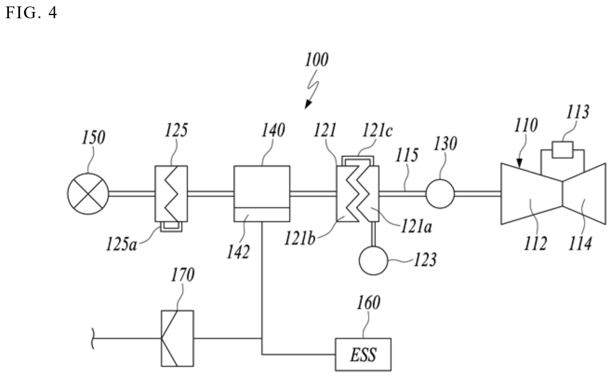

FIG. 2 is a flowchart illustrating a gas turbine power-generating and synchronous condensing method according to an exemplary embodiment. FIG. 3 is a block diagram showing the power-generating operation of the gas turbine power-generating and synchronous condensing system according to the exemplary embodiment. FIG. 4 is a block diagram showing the synchronous condensing operation of the gas turbine power-generating and synchronous condensing system according to the exemplary embodiment.

Referring to FIGS. 2 to 4, the gas turbine power-generating and synchronous condensing method may include a power-generating S101, a primarily switching operation S102, a synchronous condensing S103, and a secondary switching operation S104.

During the power-generating S101, the system is configured to rotate the turbine 114 using the starter motor 130 and the combustion gas from the combustor 113, and to generate electric power in conjunction with the generator 140.

In the power-generating S101, the low-speed rotating member 123 maintains the gas turbine 110 in low-speed rotation at a first rotating speed. During this standby state, the first clutch 121 is engaged to couple the gas turbine 110 and the generator 140.

To initiate power generation, the starter motor 130 is activated to increase the rotating speed of the gas turbine 110 from the first speed toward an ignition threshold. Simultaneously, fuel is supplied to the combustor 113, generating combustion gas that drives the turbine 114. The starter motor 130 continues to provide supplemental torque until the energy produced by the combustor 113 is sufficient to independently sustain and accelerate the rotor assembly.

In the power-generating S101, once energy from the combustor 113 is secured, the operation of the starter motor 130 is deactivated, and the gas turbine 110 is operated independently, thereby increasing the rotating speed of the gas turbine 110. At this point, the rotating speed of the gas turbine 110 may be increased to the full speed under no-load conditions.

Upon reaching the full speed no-load (FSNL) conditions, the gas turbine 110 is synchronized to the speed and frequency of the power system which are required for the power-generating operation, using the static frequency converter 142 of the generator 140. Once the speed and frequency are synchronized, the gas turbine 110 synchronizes with the power system and generates electric power.

In the power-generating S101, the flywheel 150 is maintained in a disconnected state from the generator 140 by the second clutch 125. Concurrently, the energy storage system 160 performs a function of supplementing the output during partial-load or full-load. During partial-load operation of the gas turbine 110, the energy storage system 160 provides supplemental power output to optimize the power plant's overall heat rate and efficiency. During full-load operations, if the electric power generation capacity of the power system is insufficient, the energy storage system 160 provides an additional power injection to stabilize the power system.

In the primary switching operation S102, the first clutch 121 is disengaged and the second clutch 125 is engaged, thereby providing an inertial force to the power system via the flywheel 150 and the generator 140.

The primary switching operation S102 is configured to transition the system from the power-generating operation to synchronous condensing operation during periods when the power system lacks sufficient inertia due to an increase in renewable energy generation, thereby providing inertia.

The primary switching operation S102 is configured to reduce the power output of the gas turbine 110 from the operating load to no load state while maintaining the rotating speed for disconnection from the power system. Upon verifying that the rotating speed and the operational frequency of the gas turbine 110 are stably synchronized with the power system, the generator 140 may be momentarily disconnected from the power system or maintained at the full speed no-load. Throughout this load reduction of the gas turbine 110 and disconnection from the power system, the first clutch 121 remains in an engaged state to maintain the mechanical link between the gas turbine 110 and the generator 140.

The primary switching operation S102 may include activating the static frequency converter 142 to supply rotational force to the generator 140. Simultaneously, the second clutch 125 is engaged to couple the generator 140 to the flywheel 150.

In the primary switching operation S102, the second clutch 125 may be configured to engage with the shaft system within a high-speed rotational range of approximately 3,400 rpm to 3800 rpm, and more preferably within a high-speed rotational range of 3,550 rpm to 3,650 rpm. During this engagement process, the static frequency converter 142 ensures that the operational speed and frequency of the gas turbine 110 remain synchronized with the power system requirements.

Following the engagement of the flywheel 150, the thermal input (flame energy) to the gas turbine 110 is gradually reduced. The static frequency converter 142 may then be operated in the braking energy recovery mode to increase the operational load on the gas turbine 110, thereby capturing the kinetic energy of the decelerating gas turbine 110. This reclaimed energy is converted into electrical power and transmitted to the energy storage system 160.

The primary switching operation S102 may include reducing fuel supplied to the gas turbine 110, increasing the load through the static frequency converter 142, and maintaining the synchronous speed of the gas turbine 110.

In the primary switching operation S102, once the load on the static frequency converter 142 reaches the point where the generator 140 and the flywheel 150 can operate at the synchronous speed, the function of forcibly coupling the rotor shaft 115 is disengaged from the first clutch 121, and the first clutch 121 moves to a disengaged state due to a resultant difference in rotating speed between the two components.

In the synchronous condensing S103, an inertial force is supplied to the power system via the generator 140 and the flywheel 150, and the fuel supply to the gas turbine 110 is blocked.

As the gas turbine 110 decelerates following the termination of fuel supply, the low-speed rotating member 123 is activated to maintain the rotor shaft 115 of the gas turbine 110 at the first speed, which is a standby speed. The low-speed rotating member 123 comprises a constant-speed motor configured to maintain the rotor shaft 115 within a range of approximately 1 rpm to 5 rpm, and more specifically, at approximately 3 rpm.

In the synchronous condensing S103, if the rotational inertia coefficient of the generator 140 and the flywheel 150 is insufficient, or if a larger inertia coefficients are required to stabilize the power system, the grid-forming inverter 170 may provide virtual inertia, and virtual inertia may be provided to support frequency within a range of 57.5 Hz to 61.5 Hz. Furthermore, the energy storage system 160 discharges electric power to the grid-forming inverter 170 to generate this virtual inertia. By combining the rotational inertia of the flywheel 150 with the virtual inertia of the grid-forming inverter 170, the system provides a robust, dual-layered response to grid frequency deviations.

The secondary switching operation S104 is configured to transition the power system from the synchronous condensing operation back to the power-generating operation, typically in response to a reduction in renewable energy generation or an increase in grid demand.

During the secondary switching operation S104, the gas turbine 110 is accelerated from its standby state (low speed) to a synchronous speed, and the second clutch 125 is disengaged after the first clutch 121 is engaged.

To initiate the transition, the starter motor 130 is activated to increase the rotating speed of the gas turbine 110 from the first (low) speed toward a second (ignition) speed. Simultaneously, fuel is introduced to the combustor 113, and the resulting combustion energy (flame energy) further accelerates the turbine 114.

In the secondary switching operation S104, the gas turbine 110 is accelerated by the starter motor 130 until it reaches a synchronous speed range, which corresponds to the rotational speed of the generator 140 and the flywheel 150. For example, the synchronous speed range is approximately 3,400 rpm to 3800 rpm.

The secondary switching operation S104 may include, when the gas turbine 110 reaches synchronous speed, connecting the gas turbine 110 to the generator 140 using the first clutch 121, and when the gas turbine 110 is connected to the generator 140, disconnecting the generator 140 from the flywheel 150 using the second clutch 125.

In the secondary switching operation S104, when the rotating speed of the gas turbine 110 reaches the synchronous speed, a load is reduced by the static frequency converter 142, and the synchronized speed is maintained. Furthermore, the secondary switching operation S104 may include a process in which, once the flame energy of the gas turbine 110 is increased to a level capable of sustaining the synchronous speed, the load is removed using the static frequency converter 142 to allow the rotating speed of the gas turbine 110 to increase to full speed.

In the secondary switching operation S104, the gas turbine 110 reaches full speed no-load, and is synchronized to the rotating speed and frequency required by the power system for the power-generation using the static frequency converter 142. Once the rotating speed and frequency of the gas turbine 110 are synchronized, the generator 140 is electrically coupled to the power system to resume the delivery of active power.

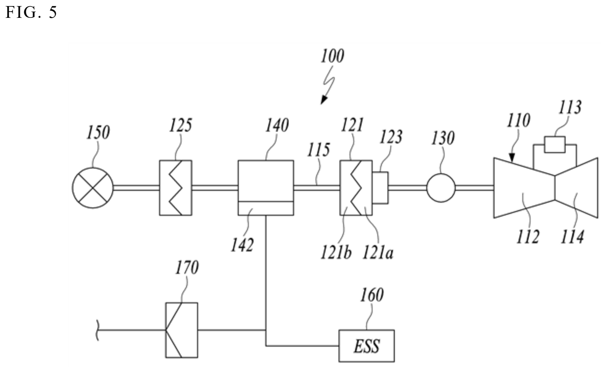

FIG. 5 is a block diagram showing the gas turbine power-generating and synchronous condensing system according to another exemplary embodiment.

Referring to FIG. 5, a gas turbine power-generating and synchronous condensing system 100 may include a gas turbine 110, a generator 140, a flywheel 150, a first clutch 121, a second clutch 125, a starter motor 130, and a low-speed rotating member 123. Unless otherwise specified, the functional characteristics of these components are substantially identical to those described with respect to the embodiment of FIG. 1.

The first clutch 121 may include a first member 121a connected to the gas turbine 110 and a second member 121b connected to the generator 140. The low-speed rotating member 123 may be disposed at the first member 121a to rotate the gas turbine 110 at a first speed in a standby mode.

The low-speed rotating member 123 is connected in series with the first clutch 121 and coupled to the first member 121a. The low-speed rotating member 123 is configured to rotate the gas turbine 110 at the first speed, which is a low-velocity standby speed. The first speed is preferably maintained within a range of approximately 2 rpm to 5 rpm, and more specifically, at approximately 3 rpm. This serial arrangement ensures that the standby rotation of the gas turbine 110 can be maintained independently of the generator 140 when the first clutch 121 is in a disengaged state.

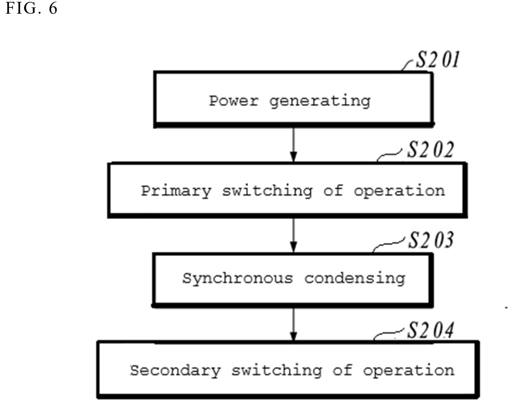

FIG. 6 is a flowchart illustrating the gas turbine power-generating and synchronous condensing method according to another exemplary embodiment.

Referring to FIGS. 5 to 6, the gas turbine power-generating and synchronous condensing method may include a generating power S201, a primary switching operation S202, a synchronous condensing S203, and a secondary switching operation S204.

The operational characteristics of the power-generating S201, the primary operation-switching S202, and the secondary operation-switching S204 are substantially identical to the corresponding steps described with reference to FIG. 2. However, the synchronous condensing S203 utilizes a modified engagement sequence to optimize mechanical transitions.

During the synchronous condensing S203, the gas turbine 110 and the generator 140 are coupled via the first clutch 121, and the synchronous condensing operation is initiated at a low speed.

While at this low speed, the generator 140 is coupled to the flywheel 150 via the second clutch 125. Specifically, when the forcible disconnection function of the second clutch 125 is deactivated, the connection between the generator 140 and the flywheel 150 is established as a result of the rotating speed differential.

In the synchronous condensing S203, subsequent to the coupling of the flywheel 150, the static frequency converter 142 increases a load to accelerate the generator 140. As the rotating speed of the generator 140 increases, a rotational speed differential is created relative to the gas turbine 110. Consequently, the first clutch 121 disengages, thereby decoupling the gas turbine 110. The gas turbine 110 continues to be rotated at low speed by the low-speed rotating member 123.

The static frequency converter 142 rotates the generator 140 and the flywheel 150 at synchronous speed to initiate synchronous condensing operation.

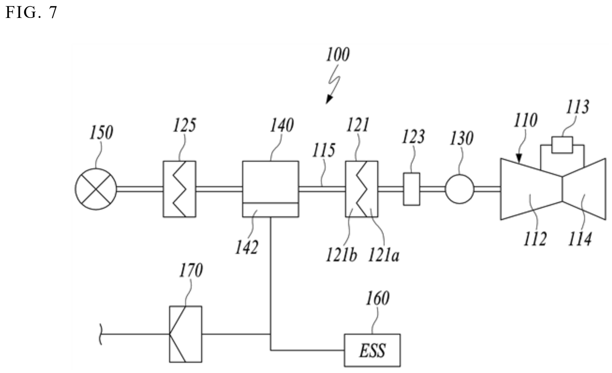

FIG. 7 is a block diagram showing the gas turbine power-generating and synchronous condensing system according to another exemplary embodiment.

Referring to FIG. 7, a gas turbine power-generating and synchronous condensing system 100 may include a gas turbine 110, a generator 140, a flywheel 150, a first clutch 121, a second clutch 125, a starter motor 130, and a low-speed rotating member 123. Unless expressly stated otherwise, the structural and functional characteristics of the components described in this embodiment are substantially identical to those described with reference to the embodiment of FIG. 1, with the exception of the low-speed rotating member 123.

The generator 140 and the gas turbine 110 are selectively coupled via the rotor shaft 115. Notably, the low-speed rotating member 123 may be disposed at a position between the generator 140 and the gas turbine 110 to rotate the gas turbine 110 at the first speed in the standby mode.

Specifically, the low-speed rotating member 123 may be coupled to the rotor shaft 115 and may rotate the gas turbine 110 at the first speed via the rotor shaft 115. In this instance, the first speed may range from approximately 2 rpm to 5 rpm, and more specifically, may be approximately 3 rpm.

While one or more exemplary embodiments have been described with reference to the accompanying drawings, it will be apparent to those skilled in the art that various modifications and variations may be made by adding, changing, or removing components without departing from the scope and spirit of the disclosure as defined in the claims, and these variations and modifications fall within the scope and spirit of the disclosure as defined in the appended claims. Therefore, the description of the exemplary embodiments should be construed in a descriptive sense and not limit the scope of the claims, and many alternatives, modifications, and variations will be apparent to those skilled in the art.

## Claims

1. A gas turbine power-generating and synchronous condensing system (100) comprising:
a gas turbine (110) comprising a compressor (112) configured to compress air, a combustor (113) configured to combust fuel, and a turbine (114) configured to be rotated by combustion gas generated by the combustor (113);
a generator (140) coupled to the gas turbine (110) to generate electrical power using a rotational force;
a flywheel (150) selectively coupled to the generator (140) and configured to provide rotational inertia;
a first clutch (121) configured to selectively couple or decouple the gas turbine (110) and the generator(140); and
a second clutch (125) configured to selectively couple or decouple the generator (140) and the flywheel (150).

2. The gas turbine power-generating and synchronous condensing system (100) of claim 1, further comprising:
a low-speed rotating member (123) configured to rotate the gas turbine (110) at a first speed during a standby mode while the gas turbine (110) and the generator (140) are decoupled from each other,
wherein the low-speed rotating member (123) is coupled to the first clutch (121) and is configured to rotate the gas turbine (110) via the first clutch (121).

3. The gas turbine power-generating and synchronous condensing system (100) of claim 2, wherein a starter motor (130) is disposed at a position between the gas turbine (110) and the first clutch (121), the starter motor (130) being configured to increase a rotational speed of the gas turbine (110) when starting the gas turbine (110).

4. The gas turbine power-generating and synchronous condensing system (100) of claim 1, further comprising:
a static frequency converter (142) coupled to the generator (140) and configured to modulate at least one of a voltage and a frequency of the generator (140).

5. The gas turbine power-generating and synchronous condensing system (100) of claim 1, further comprising:
an energy storage system (ESS;160) coupled to the static frequency converter (142), wherein the static frequency converter (142) brakes rotation of a rotor shaft (115) coupled to the gas turbine (110), generates electrical power and transmits the electrical power to the energy storage system (160).

6. The gas turbine power-generating and synchronous condensing system (100) of claim 5, further comprising:
a grid-forming inverter (170) coupled to the static frequency converter (142) and is configured to provide virtual inertia to a synchronous condenser.

7. A gas turbine power-generating and synchronous condensing method comprising:
generating power by(S101) supplying fuel to a combustor (113) to rotate a turbine (114) with the generated combustion gas;
performing a primary switching operation by (S102) decoupling a gas turbine (110) from a generator (140) via a first clutch (121), and coupling the generator (140) to a flywheel (150) via a second clutch (125);
performing a synchronous condensing operation by (S103) rotating the generator (140) and the flywheel (150) to provide rotational inertial to a power system, and rotating the gas turbine (110) at a first speed during the synchronous condensing operation; and
performing a secondary switching operation by(S104) increasing a rotating speed of the gas turbine (110) rotated at the first speed, engaging the first clutch (121) to couple the gas turbine (110) to the generator (140), and subsequently decoupling the flywheel (150) from the generator (140) via the second clutch (125).

8. The gas turbine power-generating and synchronous condensing method of claim 7, wherein the primary switching operation(S102) comprises:
maintaining the gas turbine (110) in a rotational state at a full speed no-load (FSNL) condition.

9. The gas turbine power-generating and synchronous condensing method of claim 8, wherein the primary switching of operation (S102) further comprises:
supplying a rotational force to the generator (140) via a static frequency converter (142) coupled to the generator (140); and
coupling the generator (140) to the flywheel (150) via the second clutch (125).

10. The gas turbine power-generating and synchronous condensing method of claim 19, wherein the primary switching operation (S102) further comprises:
increasing an operational load on the gas turbine (110) via the static frequency converter (142) while maintaining rotational speed.

11. The gas turbine power-generating and synchronous condensing method of claim 10, wherein the primary switching operation (S102) further comprises:
operating the static frequency converter (142) in a braking energy regeneration mode to decelerate the gas turbine (110) and generate electrical power; and
supplying electrical power to an energy storage system (ESS;160).

12. The gas turbine power-generating and synchronous condensing method of claim 11, wherein the primary switching operation (S102) is performed by deactivating a forcible engagement function of the first clutch (121), and disengaging the first clutch (121) in response to a rotational speed differential between the gas turbine (110) and the generator (140).

13. The gas turbine power-generating and synchronous condensing method of claim 7, wherein, during the synchronous condensing operation (S103), the first speed is maintained within a range of 1 rpm to 5 rpm.

14. The gas turbine power-generating and synchronous condensing method of claim 7, wherein the secondary switching operation (S104) comprises:
increasing rotating speed of the gas turbine (110) rotated at the first speed via the starter motor (130);
supplying fuel to the combustor (113) to initiate combustion; and
increasing rotating speed of the turbine (114) using the combustion gas generated by the combustor (113),
wherein the secondary switching operation (S104) is performed by coupling the gas turbine (110) to the generator (140) via the first clutch (121) upon the gas turbine (110) reaching a synchronous speed, and subsequently decoupling the flywheel (140) from the generator (140) via the second clutch (125) after the gas turbine (110) and the generator (140) are coupled to each other.

15. The gas turbine power-generating and synchronous condensing method of claim 14, wherein the secondary switching operation (S104) further comprises:
removing a load by a static frequency converter (142) and increasing rotating speed of the gas turbine (110) to full speed no-load (FSNL) condition,
wherein the secondary switching operation (S104) is performed by synchronizing the gas turbine (110) with the rotating speed and frequency required by the power system via the static frequency converter (142) upon the gas turbine (110) reaching the full speed no-load (FSNL) condition.
